# EUROPÄISCHE PATENTSCHRIFT

(11) **EP 0 892 158 B1**
(45) Veröffentlichungstag und Bekanntmachung des Hinweises auf die Patenterteilung: **12.02.2003**
(21) Anmeldenummer: 98112705.3
(22) Anmeldetag: 09.07.1998
(51) Int. Cl.: F01N 3/08

(54) **Verfahren und Vorrichtung zur Überwachung der De-Sulfatierung bei NOx-Speicherkatalysatoren**
Method and device to monitor the desulphurization of NOx storage catalytic converters
Procédé et dispositif de surveillance de désulfuration de catalyseurs de stockage de NOx

(30) Priorität: 19.07.1997 DE 19731131; 19.07.1997 DE 19731129; 23.07.1997 DE 19731624
(43) Veröffentlichungstag der Anmeldung: 20.01.1999
(73) Patentinhaber: Volkswagen Aktiengesellschaft, 38436 Wolfsburg (DE)
(72) Erfinder: Pott, Ekkehard, Dipl.-Ing., 38518 Gifhorn (DE)
(74) Vertreter: Meyer, Enno, Dr.

(56) Entgegenhaltungen:
- EP-A- 0 580 389
- EP-A- 0 601 287
- EP-A- 0 761 286
- DE-A- 19 626 837

## Beschreibung

Die Erfindung betrifft ein Verfahren zur Überwachung und Steuerung der De-Sulfatierung bei NOx-Speicherkatalysatoren, die Brennkraftmaschinen vom Otto- oder Dieselmotortyp zur Abgasreinigung nachgeschaltet sind.

NOx-Speicherkatalysatoren werden während des Betriebs durch den im Kraftstoff enthaltenen Schwefel und dessen Einlagerung als Sulfat in dem NOx-Speicherkatalysator vergiftet, so daß die NOx-Aufnahme des Speicherkatalysators behindert oder insgesamt verhindert wird. Es ist daher in periodischen Abständen eine Entschwefelung bzw. eine De-Sulfatierung des NOx-Speicherkatalysators durchzuführen. Es ist bekannt, daß eine Schwefelvergiftung des. NOx-Speicherkatalysators überwiegend oder vollständig reversibel ist, sofern in reduzierender Umgebung eine De-Sulfatierungs-Mindesttemperatur überschritten wird.

Bei magerbetriebenen Ottomotoren kann in jedem Betriebszustand bei Inkaufnahme eines entsprechenden Mehrverbrauchs mit stöchiometrischem oder fetten Luft-Kraftstoff-Gemisch gefahren werden. Durch Maßnahmen wie eine Spätzündung des Motors ist überdies die Abgastemperatur in weiten Grenzen variierbar, so daß übliche De-Sulfatierungstemperaturen von ca. 650 °C in nahezu jedem Kennfeldbereich eines Ottomotors erzielt werden können.

Derzeit bekannte NOx-Speicherkatalysatoren können oberhalb von ca. 550 °C unter mageren Bedingungen kein NOx mehr einlagern und zeigen starke Alterungseffekte beim Überschreiten von ca. 800 °C.

Bei Dieselmotoren kann ein länger andauernder Betrieb mit λ ≤ 1 wegen der damit verbundenen Minderleistung und der ansteigenden Partikelemissionen nicht durchgeführt werden.

Der Erfindung liegt daher die Aufgabe zugrunde, ein Verfahren zur gesteuerten De-Sulfatierung von NOx-Speicherkatalysatoren und eine Vorrichtung zur Durchführung des Verfahrens zu schaffen, die eine geregelte Desulfatierung ohne Zerstörung des NOx-Speicherkatalysators auf einfache Weise ermöglichen.

EP 0 580 389 A1 beschreibt eine Abgasreinigungsvorrichtung für eine magerbetreibbare Brennkraftmaschine mit einem NOx-Speicherkatalysator, bei der bei der Notwendigkeit einer De-Sulfatierung diese dann durchgeführt wird, wenn geeignete Temperaturen vor und nach dem Katalysator vorliegen. Dabei werden die Temperaturen vor und nach dem Katalysator durch geeignete Sensoren bestimmt. Die De-Sulfatierung wird durch eine wiederholten Wechsel zwischen magerem und fettem Betreiben der Brennkraftmaschine bewirkt. Nachteilig ist hier, daß es zu einer thermischen Schädigung des Katalysators kommen kann.

Der Erfindung liegt daher die Aufgabe zugrunde, ein Verfahren zur gesteuerten De-Sulfatierung von NOx-Speicherkatalysatoren und eine Vorrichtung zur Durchführung des Verfahrens zu schaffen, die eine geregelte Desulfatierung ohne Zerstörung des NOx-Speicherkatalysators auf einfache Weise ermöglichen.

Diese Aufgabe wird durch das Verfahren nach Anspruch 1 gelöst. Bevorzugte Ausgestaltungen der Erfindung sind Gegenstand der Unteransprüche.

Die Erfindung ist nachfolgend anhand der Zeichnungen erläutert, in denen :
- Fig. 1: schematisch die Vorrichtung zur Überwachung der De-Sulfatierung sowohl für einen Otto- als auch einen Dieselmotor zeigt,
- Fig. 2: den schematischen Ablauf einer De-Sulfatierung beim Mager-Otto-Motor zeigt, und
- Fig. 3: schematisch den Desulfatierungsablauf beim Dieselmotor zeigt.

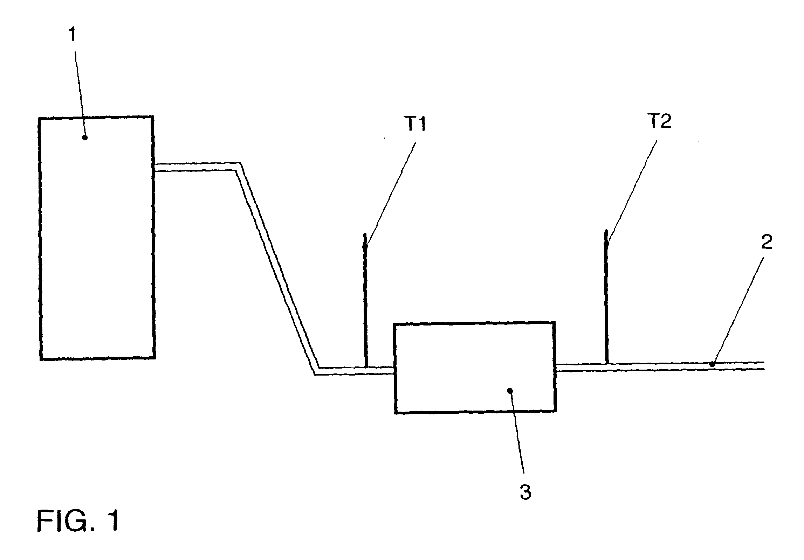

Fig. 1 zeigt die erfindungsgemäße Vorrichtung zur De-Sulfatierung einer Brennkraftmaschine bestehend aus einem Motor 1 sowie einer Abgasanlage 2, die einen NOx-Speicherkatalysator 3 sowie Temperaturfühler T1 und T2 aufweist, die unmittelbar vor und nach dem NOx-Speicherkatalysator 2 angeordnet sind. Aus der Figur ist erkennbar, daß der Temperaturfühler T1 die Abgastemperatur unmittelbar vor dem NOx-Speicher 3 mißt, während der Temperaturfühler T2 die Abgastemperatur unmittelbar nach dem NOx-Speicher 3 mißt.

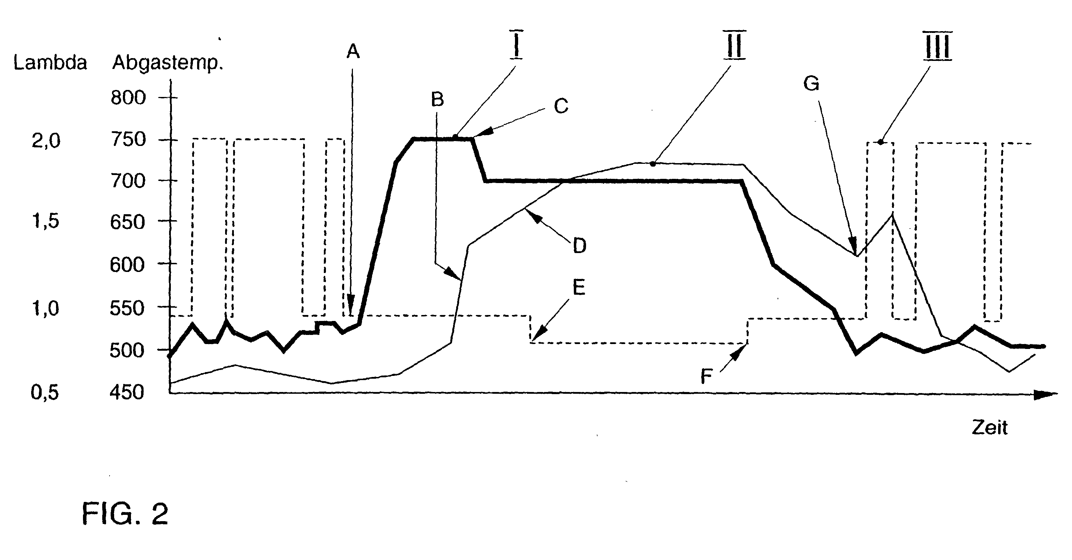

Fig. 2 zeigt schematisch den Ablauf einer De-Sulfatierung am Mager-Otto-Motor 1. Dargestellt ist der zeitliche Ablauf gegenüber der Abgastemperatur sowie dem aktuellen λ-Wert. Dabei stellt die Kurve I den Verlauf der Temperatur am ersten Temperaturfühler T1, die Kurve II den Temperaturverlauf am zweiten Temperaturfühler T2 und Kurve III den Verlauf von λ dar.

Aus dem üblichen alternierenden Fett-Mager-Betrieb heraus wird beim Vorliegen der Notwendigkeit eines Entschwefelungsvorgangs zunächst der Motor stöchiometrisch betrieben und eine abgastemperatursteigernde Maßnahme (Punkt A der Kurve III) - z.B. Spätzündung - eingeleitet, bis die Temperatur am Temperatursensor T1 vor dem Speicherkatalysator um einen Sicherheitsabstand (z.B. 50°) unter der Alterungsschwelle liegt, die ca. 800 °C bei heute üblichen NOx-Speicherkatalysatoren beträgt.

Als Folge der steigenden Abgastemperatur und der möglicherweise zunehmenden Schadstoffmenge im Abgas nimmt die Temperatur am Temperatursensor T2 hinter dem NOx-Speicherkatalysator ebenfalls zu. Falls zu erkennen ist, daß durch die katalytische Reaktion im NOx-Speicherkatalysator die Alterungsschwelle überschritten wird, beispielsweise durch zu schnellen Temperaturanstieg im Kurvenpunkt B der Kurve I, wird die abgastemperatursteigernde Maßnahme in ihrer Wirkung zurückgenommen (Punkt C der Kurve I). Die Gefahr einer internen Überhitzung des NOx-Speichers 3 ist wahrscheinlich, wenn die Temperatur-Anstiegsgeschwindigkeit in der Nähe der Alterungsschwelle so hoch ist, daß ohne Änderung der abgastemperatursteigernden Maßnahme mit einem Überschreiten der Alterungsschwelle gerechnet werden muß.

Wenn vor und nach dem NOx-Speicherkatalysator 3 die De-Sulfatierungs-Temperaturschwelle überschritten ist (Punkt D der Kurve II), wird der Motor 1 solange fett betrieben (von Punkt E bis Punkt F der Kurve III), bis die Sulfatbeladung sicher abgebaut worden ist. Dauer und Maß der Anfettung richten sich nach der errechneten oder geschätzten Schwefelbeladung. Im unmittelbaren Anschluß an die De-Sulfatierung (Punkt F der Kurve III) ist ein Magerbetrieb des Motors 1 unbedingt zu vermeiden, da wegen der hohen Katalysatortemperatur ohnehin noch kein NOx eingelagert wird und auf dem HC- und CO-gesättigten Träger die Zugabe von Sauerstoff zu einer sicheren Überschreitung der Altersschwelle zumindest in einem Teil des Speicherkatalysators 3 führen wird. Günstiger ist ein weiterer kurzfristiger Betrieb mit λ = 1, jedoch ohne abgastemperatursteigernde Maßnahmen, um ein allmähliches Absinken der Katalysatortemperatur herbeizuführen.

Erst nach Unterschreiten eines zweiten Sicherheitsabstandes (ca. 100 °) zur Alterungsschwelle hin (Punkt G der Kurve II) wird ein Fett-Mager-Betrieb des Motors 1 wieder zugelassen. Dabei kann möglicherweise im Speicher 3 kurzzeitig die NOx-Thermo-Desorptionsschwelle überschritten werden; bei den relativ niedrigen Abgastemperaturen magerer Ottomotor-Fahrzeuge ist jedoch anschließend mit einem raschen Unterschreiten der NOx-Thermo-Desorptionsschwelle zu rechnen.

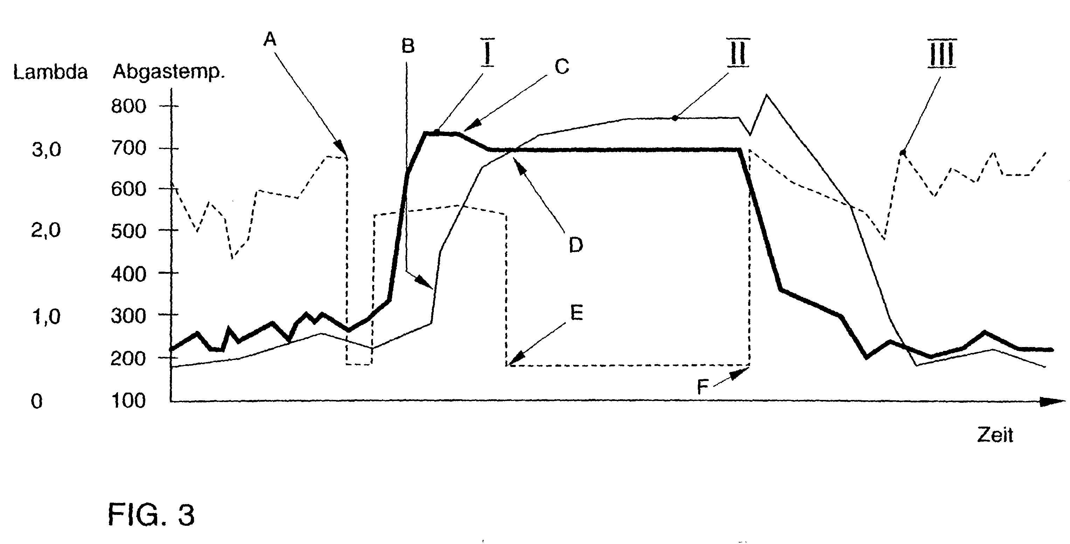

Fig. 3 zeigt den schematischen zeitlichen Ablauf einer De-Sulfatierung eines Dieselmotors 1. Die Bezeichnung der Kurven entspricht derjenigen der Fig. 2. Bei Dieselmotoren kann die Entschwefelung nicht in derselben Weise wie bei mageren Ottomotoren durchgeführt werden, da ein länger andauernder Betrieb mit λ ≤ 1 wegen der Minderleistung und der ansteigenden Partikelemissionen nicht möglich ist. Daher wird mit Blick auf die NOx-Thermo-Desorptionsschwelle beim Erkennen der Notwendigkeit einer Entschwefelung zunächst eine NOx-Regeneration durchgeführt, so daß die Katalysatoraufheizung bei entleertem NOx-Speicher 3 erfolgt. Anschließend wird bei magerem Abgas eine katalysatortemperatursteigernde Maßnahme (Punkt A der Kurve III) ergriffen, beispielsweise durch Spritzbeginnverstellung, Änderung der EGR-Rate (Abgasrückführrate), Absenken des Ladedrucks, partielle Androsselung, kombinierter Fett-Mager-Betrieb, Einspritzen von Kraftstoff in die Abgasanlage vor dem Katalysator, Nacheinspritzung (nur bei Common-Rail-Motoren). Die Abgastemperatur des Temperatursensors T1 vor dem Katalysator 3 wird analog zu Mager-Otto-Motoren mit 50 ° Sicherheitsabstand zur Alterungsschwelle eingestellt.

Durch Überwachung der Abgastemperatur des Temperatursensors T2 hinter dem NOx-Speicher 3 wird wie beim Ottomotor sichergestellt, daß durch Oxidationsreaktionen auf der NOx-Speicheroberfläche keine Überhitzung stattfindet (Punkt B der Kurve II); gegebenenfalls wird durch teilweise Rücknahme der katalysatortemperatursteigernden Maßnahme (Punkt C der Kurve I) eine thermische Schädigung vermieden. Sobald die Temperatur nach dem Katalysator am Temperatursensor T2 die De-Sulfatierungsgrenze überschritten hat (Punkt D der Kurve II), wird die De-Sulfatierung durch Anfetten des Abgases eingeleitet (Punkt E der Kurve III). Dauer der Anfettung und der Wert von λ während der Fett-Phase richten sich wiederum nach der errechneten oder geschätzten Schwefelbeladung. Die Anfettung kann analog zur NOx-Regeneration, beispielsweise durch Saugluftdrosselung, EGR-Anhebung, Nacheinspritzung oder Ladedrucksendung erfolgen.

Nach Beendigung der De-Sulfatierung (Punkt F der Kurve III) kann kein längerer Betrieb mehr mit λ ≤ 1 aufrechterhalten werden; es wird daher sofort wieder der normale Betriebsmodus eingestellt. Wegen der üblicherweise sehr niedrigen Abgastemperaturen bei Dieselmotoren und der resultierend raschen und starken Auskühlung ist trotz der nach der Entschwefelung auftretenden Oxidationsreaktionen nur eine kleine NOx-speicherinterne Temperaturspitze zu erwarten.

### BEZUGSZEICHENLISTE

- 1 -: Motor
- 2 -: Abgasanlage
- 3 -: NOx-Speicherkatalysator
- T1 -: Temperaturfühler 1
- T2 -: Temperaturfühler 2
- I -: Temperaturverlauf T1
- II -: Temperaturverlauf T2
- III -: Verlauf λ
- A -: Einleiten KTM
- B -: Temperaturanstieg zu schnell
- C -: Rücknahme KTM
- D -: Überschreiten De-Sulfatierungstemperatur
- E -: Einleiten De-Sulfatierung
- F -: Ende De-Sulfatierung
- G -: Fett-Mager-Betrieb
- KTM -: Katalysatortemperatursteigernde Maßnahme

## Patentansprüche

1. Verfahren zur De-Sulfatierung eines einer Brennkraftmaschine (1) nachgeschalteten NOx-Speichers (3), das die folgenden Schritte aufweist:
a) Vorliegen der Notwendigkeit einer Entschwefelung,
b) Einleiten und Durchführen einer abgastemperatursteigernden Maßnahme, mit der der NOx-Speicherkatalysator (3) über seine gesamte Länge mindestens auf eine vorbestimmte De-Sulfatierungstemperatur erhitzt wird, wobei eine abgastemperatursteigernde Maßnahme abhängig von der Temperatur vor und hinter dem NOx-Speicherkatalysator (3) so geregelt wird, daß eine Alterungstemperaturschwelle im NOx-Speicherkatalysator nicht überschritten wird,
c) De-Sulfatieren des NOx-Speichers durch Fettbetreiben der Brennkraftmaschine (1), und
d) Einleiten des Normalbetriebs der Brennkraftmaschine (1) nach der Beendigung des De-Sulfatierungsschritts.

2. Verfahren nach Anspruch 1, **dadurch gekennzeichnet, daß** die abgastemperatursteigernde Maßnahme so geregelt wird, daß eine Alterungstemperaturschwelle im NOx-Speicherkatalysator um einen vorbestimmten Sicherheitsabstand unterschritten wird.

3. Verfahren nach einem der vorangegangenen Ansprüche, **dadurch gekennzeichnet, daß** bei einer Brennkraftmaschine (1) des Typs Ottomotor der Motor (1) nach dem Erkennen der Notwendigkeit einer Entschwefelung stöchiometrisch betrieben wird, bevor eine abgastemperatursteigernde Maßnahme eingeleitet wird.

4. Verfahren nach Anspruch 3, **dadurch gekennzeichnet, daß** die abgastemperatursteigernde Maßnahme durch Verstellen des Zündzeitpunktes auf einen späteren Zeitpunkt erzielt wird.

5. Verfahren nach einem der vorangegangenen Ansprüche, **dadurch gekennzeichnet, daß** bei einer Brennkraftmaschine (1) des Typs Ottomotor unmittelbar nach dem DeSulfatierungsschritt ein Betrieb mit λ = 1 durchgeführt wird, bevor nach dem Unterschreiten eines vorbestimmten zweiten Sicherheitsabstandes zur Alterungsschwelle der Fett-Mager-Betrieb des Motors (1) wieder aufgenommen wird.

6. Verfahren nach Anspruch 5, **dadurch gekennzeichnet, daß** der zweite Sicherheitsabstand ca. 100 °C beträgt.

7. Verfahren nach einem der Ansprüche 1 bis 3, **dadurch gekennzeichnet, daß** bei einer Brennkraftmaschine (1) des Typs Dieselmotor nach der Erkennung der Notwendigkeit einer De-Sulfatierung zuerst eine NOx-Regeneration durchgeführt wird, bevor eine katalysatortemperatursteigemde Maßnahme eingeleitet wird.

8. Verfahren nach Anspruch 7, **dadurch gekennzeichnet, daß** die NOx-Regeneration durch einen Betrieb mit λ < 1 durchgeführt wird.

9. Verfahren nach einem der Ansprüche 7 oder 8, **dadurch gekennzeichnet, daß** die katalysatortemperatursteigemde Maßnahme durch eine Spritzbeginnzeitpunktverstellung, Änderung der EGR-Rate, Absenken des Ladedrucks, partielle Androsselung, kombinierter Fett-Mager-Betrieb, Einspritzen von Kraftstoff in die Abgasanlage vor dem Katalysator oder eine Nacheinspritzung bei CR-Motoren (1) oder eine Kombination einer oder mehrerer dieser Maßnahmen durchgeführt wird.

10. Verfahren nach einem der Ansprüche 7 bis 9, **dadurch gekennzeichnet, daß** eine Anfettung beispielsweise durch Saugluftdrosselung, EGR-Anhebung, Nacheinspritzung, Ladedrucksenkung oder eine Kombination einer oder mehrerer dieser Maßnahmen erzielt wird.

11. Verfahren nach einem der Ansprüche 7 bis 10, **dadurch gekennzeichnet, daß** der Motornormalbetrieb unmittelbar nach Beendigung der De-Sulfatierung wieder aufgenommen wird.

## Claims

1. Process for desulphating an NOx store (3) connected downstream of an internal combustion engine (1), which includes the following steps:
a) the need for desulphurization to be present,
b) initiating and carrying out a measure which increases the exhaust-gas temperature and by means of which the NOx storage catalytic converter (3) is heated at least to a predetermined desulphating temperature over its entire length, a measure which increases the exhaust-gas temperature being controlled as a function of the temperature upstream and downstream of the NOx storage catalytic converter (3), in such a way that an ageing temperature threshold in the NOx storage catalytic converter is not exceeded,
c) desulphating the NOx store by operating the internal combustion engine (1) in rich mode,
d) initiating standard operation of the internal combustion engine (1) after the desulphating step has ended.

2. Process according to Claim 1, **characterized in that** the measure which increases the exhaust-gas temperature is controlled in such a way that the temperature remains below an ageing temperature threshold in the NOx storage catalytic converter by a predetermined safety margin.

3. Process according to one of the preceding claims, **characterized in that** if the internal combustion engine (1) is a spark-ignition engine, after it has been detected that desulphurization is necessary, the engine (1) is operated stochiometrically before a measure which increases the exhaust-gas temperature is initiated.

4. Process according. to Claim 3, **characterized in that** the measure which increases the exhaust-gas temperature is carried out by adjusting the ignition time to a later time.

5. Process according to one of the preceding claims, **characterized in that** if the internal combustion engine (1) is a spark-ignition engine, immediately after the desulphating step, operation with λ = 1 is carried out before the rich/lean operation of the engine (1) is restored after the temperature has fallen below a predetermined second safety margin with respect to the ageing threshold.

6. Process according to Claim 5, **characterized in that** the second safety margin is approx. 100°C.

7. Process according to one of Claims 1 to 3, **characterized in that** if the internal combustion engine (1) is a diesel engine, after it has been detected that there is a need for desulphating, first of all an NOx regeneration is carried out before a measure which increases the catalytic converter temperature is initiated.

8. Process according to Claim 7, **characterized in that** the NOx regeneration is carried out by operation with λ < 1.

9. Process according to one of Claims 7 or 8, **characterized in that** the measure which increases the catalytic converter temperature is carried out by adjusting the start of injection time, changing the EGR rate, reducing the boost pressure, partial throttling, combined lean-rich operation, injection of fuel into the exhaust system upstream of the catalytic converter or an afterinjection in CR engines (1) or a combination of one or more of these measures.

10. Process according to one of Claims 7 to 9, **characterized in that** the mix is made richer, for example by throttling the intake air, increasing the EGR, afterinjection, reducing the boost pressure or a combination of one or more of these measures.

11. Process according to one of Claims 7 to 10, **characterized in that** standard operation of the engine is resumed immediately after the desulphating has ended.

## Revendications

1. Procédé pour la désulfatation d'un accumulateur de NOx (3) en aval d'un moteur à combustion interne (1) qui présente les étapes suivantes :
a) existence de la nécessité d'une désulfuration ;
b) lancement et exécution d'une mesure d'augmentation de la température des gaz d'échappement, par laquelle le catalyseur accumulateur de NOx (3) est chauffé, sur toute sa longueur, à au moins une température de désulfatation prédéterminée, dans lequel une mesure d'augmentation de la température des gaz d'échappement en fonction de la température avant et après le catalyseur accumulateur de NOx (3) est réglée de sorte qu'un seuil de température de vieillissement ne soit pas dépassé dans le catalyseur accumulateur de NOx ;
c) désulfatation de l'accumulateur de NOx par fonctionnement du moteur à combustion interne (1) avec un riche mélange et
d) lancement du fonctionnement normal du moteur à combustion interne (1) à la fin de l'étape de désulfatation.

2. Procédé selon la revendication 1, **caractérisé en ce que** la mesure d'augmentation de la température des gaz d'échappement est réglée de sorte que la température reste inférieure au seuil de vieillissement dans le catalyseur accumulateur de NOx d'une plage de sécurité prédéterminée.

3. Procédé selon l'une des revendications précédentes, **caractérisé en ce que**, dans un moteur à combustion interne (1) de type à allumage commandé, le moteur (1) fonctionne avec un mélange stoechiométrique après la détection de la nécessité d'une désulfuration, avant qu'une mesure d'augmentation de la température des gaz d'échappement ne soit lancée.

4. Procédé selon la revendication 3, **caractérisé en ce que** la mesure d'augmentation de la température des gaz d'échappement est obtenue par le déplacement du point d'allumage à un moment ultérieur.

5. Procédé selon l'une des revendications précédentes, **caractérisé en ce que**, dans un moteur à combustion interne (1) de type à allumage commandé, un fonctionnement à λ = 1 est immédiatement réalisé après l'étape de désulfatation, avant que, après la baisse d'une deuxième plage de sécurité prédéterminée au-dessous du seuil de vieillissement, le fonctionnement avec un mélange riche/pauvre du moteur (1) ne soit de nouveau repris.

6. Procédé selon la revendication 5, **caractérisé en ce que** la deuxième plage de sécurité s'élève à environ 100°C.

7. Procédé selon l'une des revendications 1 à 3, **caractérisé en ce que**, dans un moteur à combustion interne (1) de type moteur Diesel, après la détection de la nécessité d'une désulfatation, une régénération de NOx est d'abord effectuée avant qu'une mesure d'augmentation de température du catalyseur ne soit lancée.

8. Procédé selon la revendication 7, **caractérisé en ce que** la régénération de NOx est effectuée par un fonctionnement avec λ < 1.

9. Procédé selon l'une des revendications 7 ou 8, **caractérisé en ce que** la mesure d'augmentation de température du catalyseur est effectuée par un déplacement du moment de début d'injection, une modification du taux de recyclage des gaz d'échappement, une diminution de la pression de suralimentation, un étranglement partiel, un fonctionnement combiné à un mélange riche/pauvre, une injection de carburant dans le système de gaz d'échappement avant le catalyseur ou une post-injection dans le cas de moteurs avec rampe commune à haute pression (1) ou par une combinaison d'une ou plusieurs de ces mesures.

10. Procédé selon l'une des revendications 7 à 9, **caractérisé en ce qu'**un enrichissement est obtenu, par exemple, par étranglement de l'air aspiré, par augmentation du recyclage des gaz d'échappement, par post-injection, par chute de la pression de suralimentation ou par une combinaison d'une ou plusieurs de ces mesures.

11. Procédé selon l'une des revendications 7 à 10, **caractérisé en ce que** le fonctionnement normal du moteur est immédiatement repris à la fin de la désulfatation.
